**Europäisches Patentamt**

**European Patent Office**

**Office européen des brevets**

(11) Veröffentlichungsnummer : **0 332 606 B1**

## (12) EUROPÄISCHE PATENTSCHRIFT

(45) Veröffentlichungstag der Patentschrift :
**17.06.92 Patentblatt 92/25**

(51) Int. Cl.$^5$ : **F24H 9/20, F24D 19/10**

(21) Anmeldenummer : **89890060.0**

(22) Anmeldetag : **01.03.89**

(54) **Vorrichtung zur Erwärmung von Brauchwasser.**

(30) Priorität : **02.03.88 AT 540/88**
**09.03.88 AT 627/88**

(43) Veröffentlichungstag der Anmeldung :
**13.09.89 Patentblatt 89/37**

(45) Bekanntmachung des Hinweises auf die
Patenterteilung :
**17.06.92 Patentblatt 92/25**

(84) Benannte Vertragsstaaten :
**AT BE CH DE FR GB IT LI LU NL SE**

(56) Entgegenhaltungen :
**DE-B- 1 073 715**
**FR-A- 2 358 622**
**FR-A- 2 379 107**
**NL-A- 8 006 217**

(73) Patentinhaber : **HEIZBETRIEBE WIEN**
**GESELLSCHAFT M.B.H.**
**Spittelauer Lände 45**
**A-1090 Wien (AT)**

(72) Erfinder : **Schindelar, Franz**
**Giffingergasse 3**
**A-1233 Wien (AT)**

(74) Vertreter : **Casati, Wilhelm, Dipl.-Ing. et al**
**Patentanwälte Casati, Wilhelm, Dipl.-Ing. Itze,**
**Peter, Dipl.-Ing. Amerlingstrasse 8**
**A-1061 Wien (AT)**

## Beschreibung

Die Erfindung betrifft eine Vorrichtung zur Erwärmung von Brauchwasser in einem Warmwasserbereiter, der über einen Wärmetauscher indirekt durch Heizwasser beheizt wird, wobei in der Vorlauf- oder Rücklaufleitung des Heizwassers für den Wärmetauscher ein Regelventil eingebaut ist, welchem als Istwert die Temperatur des aus dem Warmwasserbereiter rücklaufenden Heizwassers dient, während der einstellbare Sollwert die maximal zulässige rücklaufende Heizwassertemperatur bestimmt und damit indirekt dem gewünschten Sollwert der Brauchwassertemperatur entspricht.

Es gibt bereits mittels Ölbrenner beheizte Kessel zur Versorgung von Radiatoren mit einem im Kessel erwärmten Medium (DE-OS 30 30 565). In solchen Anlagen sind zwei Kreise vorhanden, nämlich ein Kessel- und ein die Radiatoren versorgender Heizungskreis. Der Heizungskreis ist dabei über ein thermostatisches Dreiwegeventil an den Kesselkreis angeschlossen, derart, daß dieses Ventil die Verbindung zum Radiatorenheizkreis bei niedrigen Temperaturen des Mediums sperrt und mit zunehmender Temperatur freigibt. Dadurch gelingt es, das Medium im Kessel schnell aufzuheizen und erst danach den Heizkreis an den Kessel anzuschließen. Eine Erwärmung von Brauchwasser in einem Warmwasserbereiter durch indirekte Beheizung ist dabei nicht vorhanden.

Bekannt wurde weiters ein Wärmetauscher, der aus einem Behälter mit darin angeordnetem Wärmetauscherrohr für das wärmeabgebende Medium besteht (AT-PS 368 271). Dabei ist in dem Wärmetauscherrohr ein anderes Rohr angeordnet, dessen beide Enden in verschiedenen Höhen mit dem Innenraum des Behälters in Verbindung stehen. Erreicht soll durch diese Anordnung eine Umlaufbewegung des Behälterinhalts werden, dies infolge einer Thermosyphonwirkung, welche die im inneren Rohr enthaltene Flüssigkeitsmenge rasch nach oben steigen läßt. Nach Erreichen der oberen Temperaturgrenze wird die Zufuhr von wärmeabgebendem Medium abgeschaltet. Sobald die Temperatur der im Behälter vorhandenen Flüssigkeit entsprechend niedrig ist, strömt wärmezuführendes Medium durch den Durchflußraum zwischen dem Wärmetauscherrohr und dem innenliegenden Rohr.

Die Brauchwassererwärmung in Einzelhaushalten erfolgt häufig auch durch Elektrospeicher oder Gasdurchlauferhitzer. In Einfamilienhäusern mit einer Zentralheizungskesselanlage kommen teilweise Warmwasserbereiter mit einem eingebauten Wärmetauscher zum Einsatz, der an den Kesselheizwasserkreislauf angeschlossen ist. Das Heizwasser kann statt von der Kesselanlage auch von einem Fernwärmenetz oder von einer Wärmepumpe geliefert werden. Es sind auch kombinierte Heizsysteme der genannten Art bekannt.

Ein im Speicherbehälter des Warmwasserbereiters angeordneter Temperaturfühler steht in Verbindung mit einem Regelventil, um die Zufuhr des Heizwassers zu regeln. Der Temperaturfühler ist zumeist im oberen Drittel des Speicherbehälters angeordnet, d.h. es erfolgt nur eine lokale Brauchwassertemperaturmessung, die keine Aussage über den tatsächlichen Ladezustand des Speicherbehälters liefert, über dessen Boden ein Kaltsee liegt, der verhindert, daß das Gesamtvolumen des Speichers mit der gewünschten Temperatur geladen ist. Das Regelventil ist in Abhängigkeit von der durch den Fühler ermittelten lokalen Temperatur entweder vollständig geöffnet oder völlig geschlossen, wodurch im geöffneten Zustand des Regelventils ständig die volle Durchflußmenge zirkuliert und die Temperatur im Rücklauf des Heizwassers unerwünscht hohe Werte erreichen kann.

Es gibt auch bereits Steuerungen, die eine Regelung der Durchflußmenge des Heizwassers und damit der Heizleistung, gegenläufig zum Ladezustand des Warmwasserbereiters ermöglichen. In der DE-AS 10 73 715 wird vorgeschlagen, die Durchflußmenge des Heizwassers in Abhängigkeit von der Temperatur des aus dem Warmwasserbereiter rücklaufenden Heizwassers zu regeln, so daß die Heizwassermenge und die Rücklauftemperatur des Heizwassers und damit die Heizleistung in Abhängigkeit des Warmwasserbereiter-Ladezustandes steht. Es wird dabei die Ausbildung eines Kaltsees über dem Boden des Speichers vermieden, da immer die Rücklauftemperatur des Heizkreises für die Steuerung der Aufheizung zur Verfügung steht. Es besteht daher die Möglichkeit, mit einem kleinervolumigen Warmwasserbereiter die gleiche Ladekapazität zu erzielen wie mit einem größervolumigen Warmwasserbereiter. Geringer Kaltwasserzufluß, wie er bei kleinen Zapfungen von Brauchwasser etwa auftritt, können sofort durch Nachladen kompensiert werden. Die Rücklauftemperatur des Heizwassers bestimmt die Durchflußmenge des Heizwassers, wobei der Sollwert die maximale Rücklauftemperatur und indirekt die Brauchwassertemperatur bestimmt.

Unterhalb einer vorbestimmten Temperatur des rücklaufenden Heizwassers kann die Durchflußmenge auf ein Maximum geregelt werden und oberhalb einer der gewünschten Temperatur des Brauchwassers zugeordneten Solltemperatur des rücklaufenden Heizwassers kann die Durchflußmenge auf Null geregelt werden, wobei die Durchflußmenge des Heizwassers bei den dazwischenliegenden Temperaturwerten im wesentlichen gegenläufig zum jeweiligen Temperaturwert des rücklaufenden Heizwassers und dem Ladezustand des Brauchwassers regelbar ist. Solcherart kann eine Begrenzung der Rücklauftemperatur des Heizwassers erzielt werden. Durch die Begrenzung der Rücklauftemperatur des Heizwassers bei kombinierten Heizsystemen, bestehend aus einem mit Heizwasser beaufschlagten Wärmetauscher und einer Elektroheizung für das Brauchwasser kann neben einer wahlweisen Ladung mit Strom oder Heizwasser auch ein gleichzeitiger Paralleladebetrieb erfolgen. Es kann jedoch nie dazu kommen, daß Energie aus der Elektroheizung in den Heizkreis des Heizwassers fließt, da dieser Heizkreis gesperrt wird, sobald im Rücklauf die Solltemperatur erreicht ist.

In der DE-AS 10 73 715 ist eine Vorrichtung zum Erwärmen von Brauchwasser beschrieben, bei der in der Rücklaufleitung des Heizwassers für den Wärmetauscher des Warmwasserbereiters ein insbesondere als Thermostatventil ausgebildetes Regelventil eingebaut ist, welchem als Istwert die Temperatur des aus dem Warmwasserbereiter rücklaufenden Heizwassers dient, während der einstellbare Sollwert die maximal zulässige rücklaufende Heizwassertemperatur ist und damit indirekt dem gewünschten Sollwert der Brauchwassertemperatur entspricht.

Das Regelventil kann in an sich bekannter Weise außerhalb der Ladezeit und außerhalb der Heizperiode (Sommerperiode) öffnen, sobald die Temperatur in der Rücklaufleitung des Heizkreises unter den eingestellten Sollwert sinkt. Damit kann verhindert werden, daß die den Heizkreis speisende Verteilheizleitung unter den Sollwert abkühlt, was ein Entladen des Speichers verursachen würde. Außerhalb der Heizperiode wird eine Mindest-Vorlauftemperatur des Heizwassers erzielt, wobei außerhalb des Ladevorganges, im besonderen außerhalb der Heizperiode, ein Auskühlen des Heizvorlaufwassers unterhalb eines einstellbaren Sollwertes begrenzt wird.

Aufgabe der Erfindung ist es nun, in einer Vorrichtung zur Erwärmung von Brauchwasser in einem Warmwasserbereiter, der über einen Wärmetauscher indirekt durch Heizwasser beheizt wird, wobei in der Vorlauf- oder Rücklaufleitung des Heizwassers für den Wärmetauscher ein Regelventil eingebaut ist, welchem als Istwert die Temperatur des aus dem Warmwasserbereiter rücklaufenden Heizwassers dient, während der einstellbare Sollwert die maximal zulässige rücklaufende Heizwassertemperatur bestimmt und damit indirekt dem gewünschten Sollwert der Brauchwassertemperatur entspricht, eine Leistungserhöhung bzw. eine Verkürzung der Ladezeit zu erreichen. Hiezu schlägt die Erfindung vor, in der Heizwasser-Rücklaufleitung nach dem Regelventil einen Wärmetauscher anzuordnen, durch dessen Primärkreis das rücklaufende Heizwasser und durch dessen Sekundärkreis das in den Speicherbehälter des Warmwasserbereiters eintretende Kaltwasser fließt. Bei dieser Ausgestaltung erfolgt während der Brauchwasserentnahme bereits eine Aufheizung des zufließenden Kaltwassers, was zu der erwünschten Leistungserhöhung bzw. Verkürzung der Ladezeit führt.

Eine Verbesserung der Vorrichtung zur Erwärmung von Brauchwasser in einem Warmwasserbereiter, der über einen Wärmetauscher indirekt durch Heizwasser be heizt wird, wobei in der Vorlauf- oder Rücklaufleitung des Heizwassers für den Wär metauscher ein Regelventil eingebaut ist, welchem als Istwert die Temperatur des aus dem Warmwasserbereiter rücklaufenden Heizwassers dient, während der einstellbare Sollwert die maximal zulässige rücklaufende Heizwassertemperatur bestimmt und damit indirekt dem gewünschten Sollwert der Brauchwassertemperatur entspricht, in der Richtung, daß unter Voraussetzung gleichbleibender Brauchwasserentnahme, durch Erhöhung der Heizleistung, eine wesentliche Verringerung des Speichervolumens oder bei gleichem Speichervolumen eine größere Brauchwasserentnahme in der Zeiteinheit ermöglicht wird, wird erzielt, wenn erfindungsgemäß in der Heizwasser-Rücklaufleitung vor dem Regelventil ein Wärmetauscher angeordnet ist, durch dessen Primärkreis das rücklaufende Heizwasser strömt und an dessen Sekundärkreis der Kaltwasserzulauf angeschlossen ist, so daß bei offenem Kaltwasserzulauf der Heizwasserzulauf auf maximalen Durchfluß (und damit maximale Heizleistung) regelbar ist, bei geschlossenem Kaltwasserzulauf hingegen die Regelung der Heizwasserdurchflußmenge (und damit der Heizleistung) in Abhängigkeit von der Temperatur des rücklaufenden Heizwassers erfolgt. Das Regelventil wird bei dieser Anordnung mit einer tieferen Rücklauftemperatur angefahren als bei Anordnung des Regelventils vor dem Wärmetauscher, womit ein stärkeres Öffnen des Heizwasserzulaufs erfolgt, womit die Heizleistung erhöht wird und bei gleichbleibender Brauchwasserentnahmeleistung eine wesentliche Verringerung des Speichervolumens oder bei gleichem Speichervolumen eine wesentlich erhöhte Brauchwasserentnahme in der Zeiteinheit erreichbar ist.

Die Abkühlung in der Heizwasserrücklaufleitung wird vom Regelventil erfühlt und dann das Ventil entsprechend dem Ladezustand des Brauchwassers geöffnet und das Brauchwasser im Behälter nachgeladen, wodurch die Aufheizung des Brauchwassers bei Nullentnahme erfolgt.

In besonderer Ausgestaltung der erfindungsgemäßen Steuerungsanlagen kann das Regelventil außerhalb der Isolierung des Warmwasserbereiters angeordnet sein. Hiedurch kann sichergestellt werden, daß die Außentemperatur auf das Regelventil ungehindert einwirkt, das den Heizwasserkreis öffnet, sobald die Temperatur in der Rücklaufleitung unter den eingestellten Sollwert, z.B. 55°, sinkt. Das Regelventil schließt, sobald der Rücklauf des Heizwassers wieder die Temperatur von 55° erreicht hat. Für den Schließvorgang ist jedoch eine Verzögerung vorzusehen, damit nicht aufgrund des im Wärmetauscher des Heizkreises stehenden wärmeren Wassers der Durchfluß durch den Wärmetauscher frühzeitig geschlossen wird. Die Verteilheizleitung hält dabei immer heißes Heizwasser bereit, auch wenn Brauchwasser nicht entnommen und dadurch im Warmwasserbereiter die Temperatur abgesenkt wird.

Die Erfindung wird anschließend beispielsweise anhand der Zeichnung beschrieben. Es zeigen,

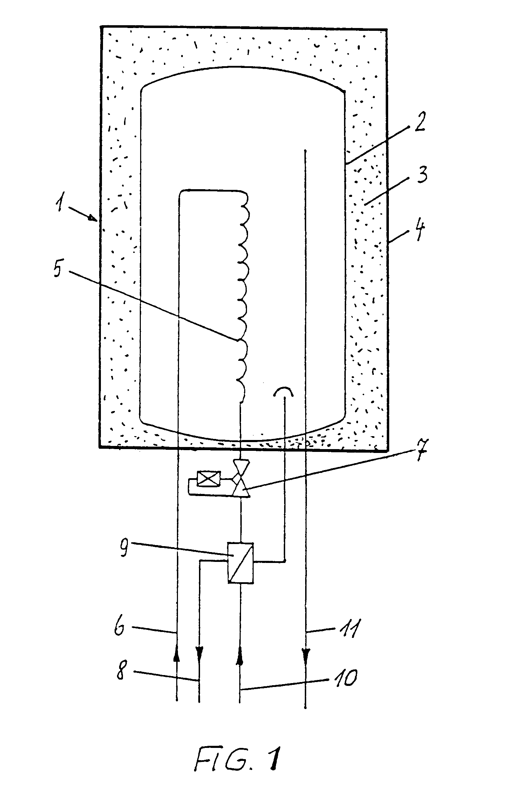

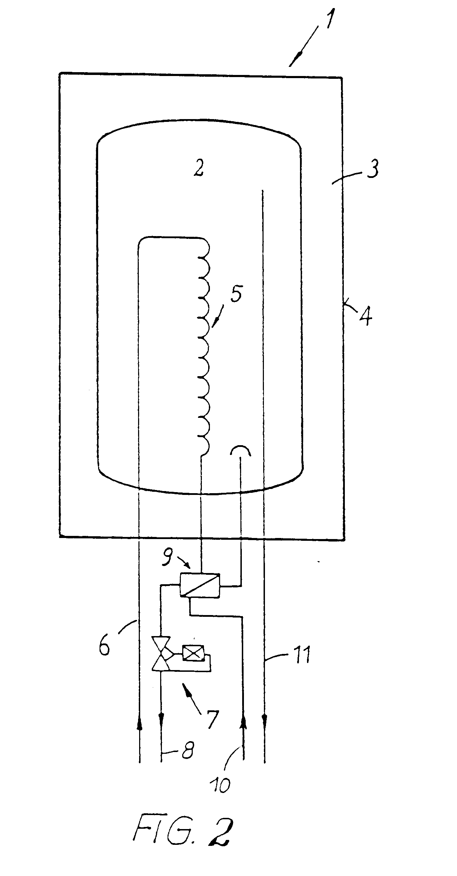

Fig. 1 ein erstes und Fig. 2 ein zweites Ausführungsbeispiel einer Vorrichtung zur Erwärmung von Brauchwasser.

In den Figuren bezeichnet 1 allgemein einen Warmwasserbereiter, der aus einem Speicher 2 mit Wärmeschutzisolierung 3 und einer Schutzverkleidung 4 besteht. Innerhalb des Speichers 2 befindet sich ein erster Wärmetauscher 5, vorzugsweise ein Rohrbündel-Wärmetauscher, der einerseits mit einer Heizwasser-Vorlaufleitung 6 und anderseits über ein Regelventil 7 mit einer Heizwasser-Rücklaufleitung 8 verbunden ist, wobei gemäß Fig. 1 nach dem Regelventil 7 noch ein zweiter Wärmetauscher 9 vorgesehen ist. Gemäß der Ausführung in Fig. 2 liegt der Wärmetauscher 9 vor dem Regelventil 7.

Der erste Wärmetauscher 5 kann auch als Rippenrohr- oder Glattrohrwärmetauscher ausgebildet sein. Eine Kaltwasserleitung 10 führt über den zweiten Wärmetauscher 9 zum Bodenbereich des Speichers 2. Vom oberen Bereich des Speichers 2 ist eine Warmwasserleitung 11 herausgeführt. Das aus dem Speicher 2 austretende Heizwasser fließt im Primärkreis des zweiten Wärmetauschers 9, während das Kaltwasser im Sekundärkreis fließt. Das Kaltwasser wird durch das aus dem Wärmetauscher 5 ausfließende Heizwasser vorgewärmt, wodurch sich letzteres abkühlt. Der zweite Wärmetauscher 9 ist vorzugsweise als Plattenwärmetauscher ausgebildet und kann auch außerhalb des Warmwasserbereiters 1 angeordnet sein. Eine Anordnung innerhalb der Isolierung 3 ist jedoch möglich.,

Das Regelventil 7 ist vorzugsweise als einstellbares Thermostatventil ausgebildet, d.h. es wird mit der Temperatur des aus dem Wärmetauscher 5 rückströmenden Heizwassers als Istwert beaufschlagt, während der Sollwert einstellbar ist. Die Regelcharacteristik des Regelventils 7 ist so gewählt, daß das Ventil 7 bei einer Temperatur von z.B. 55° geschlossen ist, während es z.B. bei 10°C vollständig geöffnet ist. Bei einer reziprok linearen Regelcharacteristik wäre dann das Ventil 7 bei einer Temperatur von 32,5°C halb geöffnet. Naturgemäß weicht die Regelcharacteristik von der Linearität ab, so daß die Stellung des halb geöffneten Ventils 7 ober oder unter der Temperatur von 32,5°C liegen kann.

Es besteht auch die Möglichkeit, daß der aktive, die Durchflußmenge regelnde Bauteil des Regelventils 7 in der Heizwasser-Vorlaufleitung 6 angeordnet ist, und daß der zugehörige Fühler die Temperatur des Heizwassers in der Heizwasser-Rücklaufleitung 8 mißt, bzw. an dieser angeordnet ist.

Die Erfindung eignet sich für den Anschluß an eine Zentralheizungskesselanlage oder Wärmepumpe und insbesondere zur Anwendung bei einer Fernheizanlage, bei der der Warmwasserbereiter 1 in einem Haus oder einer Wohnung montiert ist. Hiebei sollte die Heizwasser-Vorlauftemperatur zwischen 60 und 90°C gehalten werden, die Heizkörper der Heizungsanlage mit Thermostatventilen ausgestattet sein und der Differenzdruck im Heizkreis zwischen Heizwasser-Vorlaufleitung 6 und -Rücklaufleitung 8 ca. 1,5 mWS betragen. Die Erfindung ermöglicht hiedurch:

a) eine Erwärmung des Brauchwarmwassers auf ca. 55°C,

b) ein vollständiges Laden des im Speicherbehälter befindlichen Brauchwassers,

c) ein ständiges Nachladen unmittelbar nach der Brauchwarmwasser-Zapfung,

d) das Bilden einer Kaltwasserzone im unteren Bereich des Speicherbehälters zu verhindern,

e) ein Regeln der Heizwasserumlaufmenge reziprok zum Ladezustand und zur Vorlauftemperatur,

f) ein Begrenzen der Heizungsrücklauftemperatur auf max. 55°C,

g) außerhalb der Heizperiode (Sommerperiode) eine variable Zirkulation des Heizumlaufwassers in Abhängigkeit des Abkühlungsgrades der Vorlaufheizleitung, um eine Mindest-Vorlauftemperatur sicherzustellen,

h) den nachträglichen Anschluß an eine Zentralheizungsanlage, vorausgesetzt, daß die Zentralheizungsanlage entsprechend mit Thermostatventilen ausgestattet ist und der oben erwähnte Differenzdruck eingehalten wird. Dadurch kann bei Zentralheizungsanlagen, auch solchen für die Versorgung von Mehrfamilienwohnausanlagen, eine sonst in solchen Fällen übliche Brauchwasserzirkulationsleitung entfallen,

i) bei zusätzlicher Installation einer Elektroaufheizung des Brauchwassers, neben einer wahlweisen Ladung mit Strom oder Heizwasser auch einen gleichzeitigen Parallel-Ladebetrieb.

**Patentansprüche**

1. Vorrichtung zur Erwärmung von Brauchwasser in einem Warmwasserbereiter, der über einen Wärmetauscher (5) indirekt durch Heizwasser beheizt wird, wobei in der Vorlauf- oder Rücklaufleitung (6, 8) des Heizwassers für den Wärmetauscher (5) ein Regelventil (7) eingebaut ist, welchem als Istwert die Temperatur des aus dem Warmwasserbereiter (1) rücklaufenden Heizwassers dient, während der einstellbare Sollwert die maximal zulässige rücklaufende Heizwassertemperatur bestimmt und damit indirekt dem gewünschten Sollwert der Brauchwassertemperatur entspricht, dadurch gekennzeichnet, daß in der Heizwasser-Rücklaufleitung (8) nach dem Regelventil (7) ein Wärmetauscher (9) angeordnet ist, durch dessen Primärkreis das rücklaufende Heizwasser und durch dessen Sekundärkreis das in den Speicherbehälter (2) des Warmwasserbereiters (1) eintretende Kaltwasser fließt (Fig. 1).

2. Vorrichtung zur Erwärmung von Brauchwasser in einem Warmwasserbereiter, der über einen Wärmetauscher (5) indirekt durch Heizwasser beheizt wird, wobei in der Vorlauf- oder Rücklaufleitung (6,8) des Heizwassers für den Wärmetauscher (5) ein Regelventil (7) eingebaut ist, welchem als Istwert die Temperatur des aus dem Warmwasserbereiter (1) rücklaufenden Heizwassers dient, während der einstellbare Sollwert die maximal zulässige rücklaufende Heizwassertemperatur bestimmt und damit indirekt dem gewünschten Sollwert der Brauchwassertemperatur entspricht, dadurch gekennzeichnet, daß in der Heizwasser-Rücklaufleitung (8) vor dem Regelventil (7) ein Wärmetauscher (9) angeordnet ist, durch dessen Primärkreis das rücklaufende Heizwasser strömt und an dessen Sekundärkreis der Kaltwasserzulauf angeschlossen ist, sodaß bei offenem Kaltwasserzulauf der Heizwasserzulauf auf maxima len Durchfluß (und damit maximale Heizleistung) regelbar ist, bei geschossenem Kaltwasserzulauf hingegen die Regelung der Heizwasserdurchflußmenge (und damit der Heizleistung) in Abhängigkeit von der Temperatur des rücklaufenden Heizwassers erfolgt (Fig. 2).

3. Vorrichtung nach Anspruch 1 oder 2, dadurch gekennzeichnet, daß das Regelventil (7) in an sich bekannter Weise außerhalb der Isolierung des Warmwasserbereiters angeordnet ist.

## Claims

1. A device for heating water for domestic use in a hot water producer which is heated indirectly by hot water through a heat exchanger (5), there being incorporated into the feed or return pipe (6, 8) of hot water for the heat exchanger (5) a regulating valve (7), for which the actual value is the temperature of the hot water returning from the hot water producer (1), while the adjustable desired value determines the maximum admissible returning hot water temperature and thus indirectly corresponds to the desired value of the domestic water temperature, characterised in that downstream of the regulating valve (7) there is in the hot water return pipe (8) a heat exchanger (9) through the primary circuit of which flows the returning hot water while the cold water passes through its secondary circuit to enter the storage container (2) in the hot water producer (1) (Fig. 1).

2. A device for heating water for domestic use in a hot water producer which is heated indirectly by hot water through a heat exchanger (5), there being incorporated into the feed or return pipe (6, 8) of hot water for the heat exchanger (5) a regulating valve (7), for which the actual value is the temperature of the hot water returning from the hot water producer (1), while the adjustable desired value determines the maximum admissible returning hot water temperature and thus indirectly corresponds to the desired value of the domestic water temperature, characterised in that in the heating water return pipe (8) upstream of the regulating valve (7) there is a heat exchanger (9) through the primary circuit of which flows the returning hot water and to the secondary circuit of which the cold water feed is connected so that when the cold water feed is open the hot water feed can be regulated to maximum through-flow (and thus maximum heating output) while on the other hand when the cold water feed is closed the hot water through-flow quantity (and thus the heating output) is controlled as a function of the temperature of the returning hot water (Fig. 2).

3. A device according to Claim 1 or 2, characterised in that in per se known manner the regulating valve (7) is disposed outside the insulation of the hot water producer.

## Revendications

1. Dispositif pour chauffer de l'eau sanitaire dans un chauffe-eau qui est chauffé indirectement par de l'eau de chauffage, par l'intermédiaire d'un échangeur de chaleur (5), une soupape de régulation (7) qui a pour valeur réelle la température de l'eau de chauffage de retour du chauffe-eau (1), étant montée dans la conduite aller ou la conduite retour (6, 8) de l'eau de chauffage pour l'échangeur de chaleur, tandis que la valeur de consigne réglable détermine la température maximale admissible de retour de l'eau de chauffage et correspond donc indirectement à la valeur de consigne souhaitée pour la température de l'eau sanitaire, caractérisé en ce qu'il est monté dans le conduit retour de l'eau de chauffage (8), en aval de la soupape de régulation (7), un échangeur de chaleur (9) dont le circuit primaire est traversé par l'eau de chauffage de retour et le circuit secondaire par l'eau froide entrant dans le réservoir (2) du chauffe-eau (1) (figure 1).

2. Dispositif pour chauffer de l'eau sanitaire dans un chauffe-eau qui est chauffé indirectement par de l'eau de chauffage, par l'intermédiaire d'un échangeur de chaleur (5), une soupape de régulation (7) qui a pour valeur réelle la température de l'eau de chauffage de retour du chauffe-eau (1), étant montée dans la conduite aller ou la conduite retour (6, 8) de l'eau de chauffage pour l'échangeur de chaleur, tandis que la valeur de consigne réglable détermine la température maximale admissible de retour de l'eau de chauffage et correspond donc indirectement à la valeur de consigne souhaitée pour la température de l'eau sanitaire, caractérisé en ce qu'il est monté dans la conduite retour de l'eau de chauffage (8), en amont de la soupape de régulation (7), un échangeur de chaleur (9) dont le circuit primaire est traversé par l'eau de chauffage de retour et le circuit secondaire est raccordé à l'arrivée d'eau froide, ce qui fait que lorsque l'arrivée d'eau froide est ouverte, l'arrivée d'eau de chauffage peut être réglée sur le débit maximal (et donc sur la puissance de chauffe maximale), en revanche lorsque l'arrivée d'eau froide est fermée, le réglage du débit d'eau de chauffage (et donc de la puissance de chauffe) s'effectue en fonction de la température de l'eau de chauffage de retour (figure 2).

3. Dispositif selon la revendication 1 ou 2, caractérisé en ce que la soupape de régulation (7) est placée, de manière connue en sol, à l'extérieur de l'isolation du chauffe-eau.

FIG. 1

FIG. 2